(19)

**Europäisches Patentamt**

**European Patent Office**

**Office européen des brevets**

(11) **EP 1 724 105 A1**

(12) **EUROPÄISCHE PATENTANMELDUNG**

(43) Veröffentlichungstag:
**22.11.2006 Patentblatt 2006/47**

(51) Int Cl.:
***B32B 27/00*** *(2006.01)*

(21) Anmeldenummer: **06009422.4**

(22) Anmeldetag: **08.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **17.05.2005 DE 102005023337**

(71) Anmelder: **Wipak Walsrode GmbH & Co. KG**
**29656 Walsrode (DE)**

(72) Erfinder:
  • **Kaschel, Gregor, Dr.**
    **29699 Bornlitz (DE)**
  • **Brandt, Rainer, Dr.**
    **29664 Düshorn (DE)**

  • **Toivola, Timo**
    **15800 Lahti (FI)**
  • **Lehto, Keijo**
    **15540 Villähde (FI)**
  • **Junnila, Jarmo**
    **15210 Lahti (FI)**
  • **Silander, Harri**
    **04300 Tuusula (FI)**
  • **Saaristo, Esko**
    **15550 Nastola (FI)**

(74) Vertreter: **Bülle, Jan et al**
**Kutzenberger & Wolff**
**Patentanwaltssozietät**
**Theodor-Heuss-Ring 23**
**50668 Köln (DE)**

(54) **Thermoformbares Verpackungsmaterial mit innenliegendem Druckbild**

(57) Die Erfindung betrifft eine thermoformbare Mehrschichtfolie umfassend
- eine Trägerschicht **T,** welche auf zumindest einem thermoplastischen Polymer basiert und eine der beiden Oberflächenschichten der Mehrschichtfolie bildet;
- eine Siegelschicht **S,** welche ggf. mehrlagig ist, auf zumindest einem thermoplastischen Polymer basiert und die andere der beiden Oberflächenschichten der Mehrschichtfolie bildet;
- ggf. eine oder mehrere Zwischenschichten, welche gleich oder verschieden auf zumindest einem thermoplastischen Polymer basieren und zwischen der Trägerschicht **T** und der Siegelschicht **S** angeordnet sind; und
- ein innenliegendes Druckbild **D;**

wobei die beiden unmittelbar an das Druckbild **D** angrenzenden Schichten gleich oder verschieden jeweils eine Schichtdicke von mehr als 2,0 μm aufweisen.

EP 1 724 105 A1

**Beschreibung**

Die Erfindung betrifft eine Mehrschichtfolie mit innenliegendem Druckbild, d.h. mit einem Druckbild, welches nicht an der Oberfläche der Mehrschichtfolie, sondern zwischen ihren Schichten liegt. Die erfindungsgemäße Mehrschichtfolie ist besonders vorteilhaft zum Verpacken verderblicher Nahrungsmittel geeignet.

Bedruckte Verpackungsmaterialien sind im Stand der Technik weit verbreitet. Auf diese Weise erfüllt die Verpackung mehrere Funktionen - einerseits schützt sie das Verpackungsgut vor äußeren Einflüssen, andererseits verleiht sie ihm ein ansprechendes Aussehen und informiert über seine Eigenschaften, wie z.B. Art, Inhaltsstoffe, Haltbarkeit, Gewicht, Preis, etc.

Meist erfolgt die Bedruckung der Verpackungsmaterialien jedoch auf ihrer äußeren Oberfläche, so dass die Druckfarben nach außen exponiert sind und das Druckbild beschädigt werden kann. Beispielsweise können mechanische Einwirkungen im Zuge der weiteren Verarbeitung oder während der Lagerung zu Verkratzungen und Abschürfungen der Druckfarbe führen.

Auch thermische Einwirkungen, beispielsweise im Verlauf einer Pasteurisation des verpackten Verpackungsguts, können zum Ablösen, Verlaufen, etc. der ungeschützten Druckfarben führen.

Es ist bekannt, zum besseren Schutz das Druckbild nicht auf der Oberflächenschicht, sondern auf einer Zwischenschicht der Folie aufzubringen, wodurch es vor mechanischen und thermischen Einwirkungen durch die darüber liegenden Schichten geschützt wird. Diese darüber liegenden Schichten müssen dann ein ausreichendes Maß an Transparenz aufweisen, damit das Druckbild von außen durch die schützenden Schichten hindurch betrachtet werden kann.

EP-A 860 271 offenbart ein Verpackungsmaterial, welches eine Schicht aus Polypropylen umfasst, die einen anorganischen Füllstoff enthält. Auf zumindest eine Seite der Polypropylenschicht wird eine bedruckbare Schicht laminiert. Bevorzugt wird die bedruckbare Schicht nach dem Bedrucken mit einem 1-5 $\mu$m dicken Film aus einem Schutzlack überzogen, um die bedruckte Schicht vor Verkratzungen zu schützen.

Neben der Verwendung von Schutzlacken ist es auch bekannt, Verbundfolien mit innenliegendem Druckbild dadurch herzustellen, dass eine Trägerfolie zunächst bedruckt und anschließend mit einer transparenten Folie kaschiert wird. Unter "Kaschieren" von Kunststofffolien versteht man gemeinhin das Aufbringen von ausgeformten Folien auf einen Träger, welcher ebenfalls eine Folie sein kann. Damit die ausgeformte Folie auf dem Träger haftet, wird üblicherweise ein Kaschierklebstoff zwischen Folie und Träger gebracht, der durch chemische und/oder physikalische Prozesse aushärtet.

Die Verwendung von aushärtenden Kaschierklebstoffen oder Lacken hat jedoch den Nachteil, dass die erhaltenen Mehrschichtfolien üblicherweise nicht mehr thermoformbar sind, d.h. beispielsweise auf marktüblichen Tiefziehapparaturen nicht mehr verarbeitet werden können. Dies hängt damit zusammen, dass die Kaschierklebstoffe üblicherweise durch Quervernetzung der Polymere aushärten und daher auch im erwärmten Zustand formstabil sind (Duroplaste). Für eine zufriedenstellende Thermoformbarkeit ist jedoch ein thermoplastisches Verhalten aller Schichten des Verbundmaterials erforderlich. Ferner ist die Wiederverwertbarkeit (Recyclingfähigkeit) von Verbundfolien, welche chemisch aushärtende Kaschierklebstoffe oder Lacke enthalten, stark eingeschränkt. Auch eignen sich derartige Mehrschichtfolien nur bedingt zur Verpackung verderblicher Nahrungsmittel, da die Kaschierklebstoffe häufig Substanzen enthalten, welche aus der Verpackung in das Nahrungsmittel diffundieren können und gesundheitlich bedenklich oder sogar toxisch sind.

Der Erfindung liegt somit die Aufgabe zugrunde, eine bedruckte Mehrschichtfolie zur Verfügung zu stellen, welche Vorteile gegenüber den Mehrschichtfolien des Standes der Technik aufweist. Insbesondere sollte das Druckbild vor Einflüssen von außen, wie mechanischen oder thermischen Einwirkungen, geschützt sein. Die Mehrschichtfolie sollte gute mechanische und optische Eigenschaften aufweisen, d.h. sie sollte thermoformbar, insbesondere tiefziehfähig sein, ohne dass sich die optischen Eigenschaften durch die Thermoformung signifikant verschlechtern. Ferner sollte die Mehrschichtfolie recyclingfähig und zur Verpackung verderblicher Nahrungsmittel geeignet sein.

Es wurde überraschend gefunden, dass diese Aufgabe gelöst wird durch eine bedruckte, thermoformbare, vorzugsweise tiefziehfähige, Mehrschichtfolie umfassend

- eine Trägerschicht **T,** welche auf zumindest einem thermoplastischen Polymer basiert und eine der beiden Oberflächenschichten der Mehrschichtfolie bildet;

- eine Siegelschicht **S,** welche ggf. mehrlagig ist, auf zumindest einem thermoplastischen Polymer basiert und die andere der beiden Oberflächenschichten der Mehrschichtfolie bildet;
ggf. eine oder mehrere Zwischenschichten, welche gleich oder verschieden auf zumindest einem thermoplastischen Polymer basieren und zwischen der Trägerschicht **T** und der Siegelschicht S angeordnet sind; und

- ein innenliegendes Druckbild **D;**

wobei die beiden unmittelbar an das Druckbild **D** angrenzenden Schichten gleich oder verschieden jeweils eine Schichtdicke von mehr als 2,0 μm, bevorzugt ≥ 2,5 μm, ≥ 3,0 μm, ≥ 3,5 μm, ≥ 4,0 μm, ≥ 4,5 μm oder ≥ 5,0 μm, bevorzugt mindestens 7,5 μm, bevorzugter mindestens 10 μm, noch bevorzugter mindestens 15 μm, am bevorzugtesten mindestens 20 μm und insbesondere mindestens 25 μm aufweisen.

Die erfindungsgemäße Mehrschichtfolie zeichnet sich durch gute mechanische Eigenschaften aus, kann insbesondere auf marktüblichen Apparaturen thermogeformt, vorzugsweise tiefgezogen, werden. Auf Kaschierklebstoffe und Lacke kann dabei vollständig verzichtet werden, wodurch Recyclingfähigkeit und Eignung zum Verpacken verderblicher Nahrungsmittel gewährleistet sind. Das Druckbild **D** ist wirksam vor äußeren Einflüssen geschützt, wie z.B. vor mechanischen oder thermischen Einwirkungen, so dass es dauerhaft und beständig sichtbar bleibt. Obwohl auf Kaschierklebstoffe etc. verzichtet werden kann, weist die Mehrschichtfolie eine ausgezeichnete Verbundhaftung auf.

Die erfindungsgemäße Mehrschichtfolie ist thermoformbar, vorzugsweise tiefziehfähig. Der Begriff "tiefziehfähig" im Sinne der Erfindung definiert ein Material, welches unter Wärmeeinwirkung, insbesondere bei Temperaturen von 70°C und mehr, auf einer geeigneten Vorrichtung "tiefgezogen" werden kann, d.h. unter Einwirkung von Druck (und/ oder Vakuum) beispielsweise zu einer Verpackungsmulde ausgebildet werden kann. Es handelt sich dabei um ein Material, welches thermoplastische Eigenschaften aufweist, so dass es im erwärmten Zustand verformbar ist, bei Raumtemperatur jedoch eine ausreichende Formstabilität aufweist, so dass auch nach Einbringen des Verpackungsguts im wesentlichen die durch Tiefziehen vorgegebene Form (z.B. Verpackungsmulde) erhalten bleibt. Das Tiefziehen kann beispielsweise mit einem Tiefziehverhältnis im Bereich von 1:1 bis 1:3 erfolgen, ohne dass die erfindungsgemäße Mehrschichtfolie reißt oder beschädigt wird.

Bevorzugt bedeutet der Begriff "thermoformbar" bzw. "tiefziehfähig" im Sinne der Erfindung, dass die Mehrschichtfolie auf einer Formstation vom Typ *Multivac R 230* mit einer Formgeometrie der Länge 180 mm, der Breite 110 mm und der Höhe 50 mm bei einer Formtemperatur von 95°C, einer Formzeit von 2,5 Sekunden und einer Taktzahl von 14,5 min$^{-1}$ ohne Einreißen vollständig ausgeformt werden kann; nicht thermoformbare bzw.nicht tiefziehfähige Mehrschichtfolien unterscheiden sich von den erfindungsgemäßen Mehrschichtfolien dadurch, dass sie unter diesen Bedingungen einreißen.

Die erfindungsgemäße Mehrschichtfolie enthält ein innenliegendes Druckbild **D.** Dies bedeutet, dass das Druckbild **D** nicht an einer der beiden Oberflächen der erfindungsgemäßen Mehrschichtfolie angeordnet ist, sondern auf seinen beiden Seiten jeweils unmittelbar an eine der Schichten der Mehrschichtfolie angrenzt. Diese beiden Schichten werden zum Zwecke der Beschreibung auch als "unmittelbar an das Druckbild **D** angrenzende Schichten" bezeichnet.

Das Druckbild **D** kann sich über die gesamte Fläche der Mehrschichtfolie erstrecken, so dass das Druckbild **D** auch eine vollflächig aufgetragene Farbschicht umfasst, die beispielsweise mit üblichen Druckverfahren hergestellt wurde. Die Mehrschichtfolie kann ggf. vollflächig bedruckt sein, bevorzugt ist sie teilflächig bedruckt. Das Druckbild **D** kann beliebige Strukturen umfassen, wie Schrift und/oder Bilder. Ferner kann das Druckbild **D** eine zusammenhängende Fläche oder mehrere voneinander getrennte Flächen umfassen.

Damit das Druckbild **D** für den Betrachter der Mehrschichtfolie sichtbar ist, sind bevorzugt ausgehend vom innenliegenden Druckbild **D**

- alle aufeinanderfolgenden, der Trägerschicht **T** zugewandten Schichten, d.h. die ggf. auf dieser Seite unmittelbar an das Druckbild **D** angrenzende und die ggf. darüber liegende(n) Zwischenschicht(en) und die Trägerschicht **T,** und/oder

- alle aufeinanderfolgenden, der Siegelschicht **S** zugewandten Schichten, d.h. die auf dieser Seite unmittelbar an das Druckbild **D** angrenzende und die ggf. darüber liegende(n) Zwischenschicht(en) und die Siegelschicht **S,** transparent.

In einer besonders bevorzugten Ausführungsform sind alle Schichten der Mehrschichtfolie transparent, d.h. die Mehrschichtfolie umfasst bevorzugt keine Schichten, welche beispielsweise zumindest teilweise metallisiert und/ oder mit Füllstoffen (z.B. $CaCO_3$, $SiO_2$, $TiO_2$, etc.) versetzt und daher zumindest in einigen Bereichen weitgehend lichtundurchlässig sind.

In einer anderen bevorzugten Ausführungsform ist wenigstens eine Schicht der Mehrschichtfolie auf zumindest einem Teil ihrer Fläche metallisiert, und die übrigen Schichten der Mehrschichtfolie sind bevorzugt transparent. Dies hat ggf. zur Folge, dass das Druckbild **D** in den Bereichen, in denen die Schicht metallisiert ist, nur von der Seite der Mehrschichtfolie aus betrachtet werden kann, von der aus die metallisierte Fläche den Hintergrund für das Druckbild **D** bildet. Von der anderen Seite der Mehrschichtfolie aus versperrt die metallisierte Fläche hingegen den Blick auf das Druckbild **D.**

In einer weiteren Ausführungsform der erfindungsgemäßen Mehrschichtfolie ist zumindest eine Schicht gefärbt, und die übrigen Schichten der Mehrschichtfolie sind bevorzugt transparent.

Eine "transparente Schicht" im Sinne der Erfindung zeichnet sich dadurch aus, dass ein Verpackungsgut durch diese Schicht hindurch mit bloßem Auge betrachtet werden kann.

Die Transparenz wird bevorzugt mit Hilfe von Densitometem quantifiziert. Derartige Methoden sind dem Fachmann geläufig. Bevorzugt kann als Maß für die Transparenz die Trübung als optischer Wert gemessen werden. Die Messung der Trübung erfolgt bevorzugt nach der ASTM-Prüfnorm D 1003-61 m, Procedure A, nach Eichung des Messgerätes mit Trübungsnormalen zwischen 0,3 und 34% Trübung. Als Messinstrument eignet sich beispielsweise ein Hazemeter der Fa. Byk-Gardner mit Ulbricht-Kugel, das in einem Raumwinkel von 8° bis 160° eine integrierte Messung der diffusen Lichtdurchlässigkeiten gestattet.

Die einzelnen Schichten der erfindungsgemäßen Mehrschichtfolie weisen im unbedruckten Zustand bevorzugt eine nach dem vorstehend beschriebenen Verfahren bestimmte Trübung von weniger als 14%, bevorzugter weniger als 12%, noch bevorzugter weniger als 10%, am bevorzugtesten weniger als 8% und insbesondere weniger als 6% auf.

Bevorzugt weist die Mehrschichtfolie als solche zumindest in ggf. nicht bedruckten Bereichen eine Trübung von weniger als 30%, bevorzugter weniger als 25%, noch bevorzugter weniger als 20%, am bevorzugtesten weniger als 15% und insbesondere weniger als 10% auf.

In einer bevorzugten Ausführungsform weisen ausgehend von dem innenliegenden Druckbild **D** alle aufeinanderfolgenden, der Trägerschicht **T** zugewandten Schichten, d.h. die ggf. auf dieser Seite unmittelbar an das Druckbild **D** angrenzende und die ggf. darüber liegende(n) Zwischenschicht(en) einschließlich der Trägerschicht **T,** in der Summe eine Trübung von weniger als 30%, bevorzugter weniger als 28%, noch bevorzugter weniger als 26%, am bevorzugtesten weniger als 24% und insbesondere weniger als 22% auf.

Die Abfolge der einzelnen Schichten innerhalb der erfindungsgemäßen Mehrschichtfolie und die Abfolge der ggf. vorhandenen Lagen der ggf. mehrlagigen Siegelschicht **S** wird zum Zwecke der Beschreibung durch eine Schreibweise abgekürzt, wobei "//" die Grenzfläche zweier benachbarter Schichten und "/" die Grenzfläche zweier ggf. vorhandener benachbarter Lagen markiert. Besteht die erfindungsgemäße Mehrschichtfolie beispielsweise aus einer Trägerschicht **T** und einer einlagigen Siegelschicht S, so wird dies durch die Schreibweise **"T//S"** ausgedrückt. Dabei ist es nicht zwingend erforderlich, dass zwei durch "//" getrennte Schichten unmittelbar aufeinanderfolgen, d.h. einander berühren - es ist auch möglich, dass weitere Schichten eingeschoben sind. Umfasst die Siegelschicht **S** eine Lage $S_1$ und eine Lage $S_2$, so kann dies durch **"($S_1$/$S_2$)"** ausgedrückt werden. Wird für die Siegelschicht nur **"S"** angegeben, so kann die Siegelschicht **S** sowohl einlagig als auch mehrlagig sein. Befinden sich zwischen der Trägerschicht **T** und der Siegelschicht S n gleiche oder verschiedene Zwischenschichten $Z_n$, so können diese mit $Z_1$, $Z_2$, $Z_3$, ... $Z_{n-2}$, $Z_{n-1}$, $Z_n$ individualisiert werden. Wird nur auf eine einzelne Zwischenschicht Bezug genommen, so wird diese mit **"Z"** bezeichnet.

Das innenliegende Druckbild **D** wird mit **"-D-"** dargestellt. Die unmittelbare Angrenzung der beiden benachbarten Schichten wird durch den Bindestrich zum Ausdruck gebracht. Sind mehrere Druckbilder **D** vorhanden, so kann dies durch "-$D_1$-", "-$D_2$-", usw. ausgedrückt werden.

Eine zumindest teilflächige Metallisierung wird mit "-met-" abgekürzt. Wo ein Druckbild **D** bzw. ein zumindest teilweise metallisierter Bereich "met" vorhanden ist, wird auf das Zeichen "//" verzichtet.

Der Verbund **T//$Z_1$-D- $Z_2$//($S_1$/$S_2$/$S_3$)** umfasst demnach eine Trägerschicht **T,** zwei Zwischenschichten $Z_1$ und $Z_2$ und eine dreilagige Siegelschicht **($S_1$/$S_2$/$S_3$),** wobei das Druckbild **D** zwischen der Zwischenschicht $Z_1$ und der Zwischenschicht $Z_2$ angeordnet ist. Im Verbund **T-met-$Z_1$-D- $Z_2$//($S_1$/$S_2$/$S_3$)** befindet sich zusätzlich zwischen der Trägerschicht **T** und der Zwischenschicht $Z_1$ ein zumindest teilweise metallisierter Bereich. Besonders bevorzugt ist die Mehrschichtfolie PET-met-PET-**D-S.**

In einer bevorzugten Ausführungsform der erfindungsgemäßen Mehrschichtfolie grenzt die Siegelschicht **S** auf der einen Seite und die Trägerschicht **T** auf der anderen Seite unmittelbar an das Druckbild **D** an. Da die Siegelschicht **S** die eine Oberflächenschicht und die Trägerschicht **T** die andere Oberflächenschicht der erfindungsgemäßen Mehrschichtfolie darstellt, besteht die Mehrschichtfolie in diesem Fall nur aus der Siegelschicht **S,** der Trägerschicht **T** und dem dazwischen befind**lichen, innenliegenden Druckbild D (S-D-T).**

In einer anderen bevorzugten Ausführungsform der erfindungsgemäßen Mehr schichtfolie ist zwischen der Trägerschicht **T** und der Siegelschicht **S** eine Zwischenschicht **Z** angeordnet, welche entweder zusammen mit der Siegelschicht **S** unmittelbar an das Druckbild **D** angrenzt **(S-D-Z//T),** oder welche zusammen mit der Trägerschicht **T** unmittelbar an das Druckbild **D** angrenzt **(S//Z-D-T).**

In einer weiteren bevorzugten Ausführungsform der erfindungsgemäßen Mehrschichtfolie sind zwischen der Trägerschicht **T** und der Siegelschicht **S** zwei Zwischenschichten $Z_1$ und $Z_2$ angeordnet, welche ihrerseits unmittelbar an das Druckbild **D** angrenzen **(S//$Z_1$-D-$Z_2$//T).**

Dementsprechend sind je nach Anzahl n der Zwischenschichten $Z_1$... $Z_n$ verschiedene Schichtabfolgen und Anordnungen der innenliegenden Druckbild **D** möglich, welche nachfolgend für die Fälle n = 0 bis 4 zusammengefasst sind:

| n | S-D-... | S//...$Z_i$-D-$Z_{i+1}$...//T | ...$Z_n$-D-T |
|---|---------|-------------------------------|--------------|
| 0 | S-D-T | - | - |
| 1 | S-D-Z//T | - | S//Z-D-T |
| 2 | S-D-$Z_1$//$Z_2$//T | S//$Z_1$-D-$Z_2$//T | S//$Z_1$//$Z_2$-D-T |

(fortgesetzt)

| n | S-D-... | S//...$Z_i$-D-$Z_{i+1}$...//T | ...$Z_n$-D-T |
|---|---|---|---|
| 3 | S-D-$Z_1$//$Z_2$//$Z_3$//T | S//$Z_1$-D-$Z_2$//$Z_3$//T S//$Z_1$//$Z_2$-D-$Z_3$//T | S//$Z_1$//$Z_2$//$Z_3$-D-T |
| 4 | S-D-$Z_1$//$Z_2$//$Z_3$//$Z_4$//T | S//$Z_1$-D-$Z_2$//$Z_3$//$Z_4$//T S//$Z_1$//$Z_2$-D-$Z_3$//$Z_4$//T S//$Z_1$//$Z_2$//$Z_3$-D-$Z_4$//T | S//$Z_1$//$Z_2$//$Z_3$//$Z_4$-D-T |

In einer bevorzugten Ausführungsform der erfindungsgemäßen Mehrschichtfolie grenzt die Trägerschicht **T** unmittelbar an das Druckbild **D** an. Bevorzugt beträgt in diesem Fall die Schichtdicke der Trägerschicht **T** mindestens 20 $\mu$m, bevorzugter mindestens 50 $\mu$m, bevorzugter mindestens 100 $\mu$m, noch bevorzugter mindestens 200 $\mu$m, am bevorzugtesten mindestens 250 $\mu$m und insbesondere mindestens 300 $\mu$m.

In einer weiteren bevorzugten Ausführungsform der erfindungsgemäßen Mehrschichtfolie sind zwischen der Trägerschicht **T** und dem Druckbild **D** eine oder mehrere Zwischenschichten angeordnet, so dass nicht die Trägerschicht **T,** sondern eine Zwischenschicht unmittelbar an das Druckbild **D** angrenzt. Bevorzugt beträgt in diesem Fall die Summe der Schichtdicken der Trägerschicht **T** und der einen oder mehreren zwischen der Trägerschicht **T** und dem Druckbild **D** angeordneten Zwischenschicht(en) mindestens 20 $\mu$m, bevorzugter mindestens 50 $\mu$m, bevorzugter mindestens 100 $\mu$m, noch bevorzugter mindestens 200 $\mu$m, am bevorzugtesten mindestens 250 $\mu$m und insbesondere mindestens 300 $\mu$m.

Das innenliegende Druckbild **D** der erfindungsgemäßen Mehrschichtfolie basiert vorzugsweise auf üblichen Druckfarben.

"Druckfarben" im Sinne der Beschreibung sind bevorzugt farbige Flüssigkeiten oder Pasten, mit deren Hilfe ein Druckträger oder eine Druckform ein Druckbild, d.h. eine Bedruckung, reproduzierbar auf ein Substrat, d.h. auf zumindest eine Schicht der erfindungsgemäßen Mehrschichtfolie, übertragen kann. Druckfarben setzen sich üblicherweise aus Bindemitteln, Farbmitteln (Pigmenten, Farbstoffen), Lösungsmitteln und Additiven zusammen.

Die Bindemittel erfüllen dabei üblicherweise zweierlei Aufgaben - einerseits benetzen und umhüllen sie die farbgebende Komponente und übertragen diese über das Farbwerk und die Druckform auf das Substrat - andererseits fixieren sie die Pigmente auf dem Substrat und stellen einen widerstandsfähigen Druck her. Typische Bindemittel sind: a) Halbsynthetische Polymere (modifizierte Naturprodukte), z.B. Cellulosederivate wie Nitrocellulose, Ethylcellulose, Celloluseacetatpropionat oder -butyrat; und b) Vollsynthetische Polymere: Produkte auf Erdölbasis, Polyvinylbutyralharze (PVB) Polyvinylchlorid-Mischpolymerisate (basierend auf PVC), Polyacrylate, Polyamide, Polyurethane (PUR).

Farbmittel umfassen alle farbgebenden Stoffe, wie Pigmente, Farbstoffe und Pigmentpräparationen. Farbstoffe sind im Anwendungsmedium lösliche Stoffe, Pigmente sind im Anwendungsmedium praktisch unlöslich.

Das Anwendungsmedium setzt sich aus Bindemittel und Lösungsmittel sowie ggf. üblichen Additiven zusammen. Typische Lösungsmittel sind organisch, wie z.B. Ethanol, Ethylacetat, Aceton, Propanol, Methylethylketon, etc. Additive modifizieren das Eigenschaftsprofil der Druckfarbe, wie z.B. die Haftung, die Elastizität und die Gleiteigenschaften.

Es ist auch möglich, lösungsmittelfreie Druckfarben einzusetzen, die im allgemeinen durch eine strahleninduzierte Vernetzung (z.B. UV-Strahlen oder Elektronenstrahlen) aushärten.

In einer bevorzugten Ausführungsform der erfindungsgemäßen Mehrschichtfolie basieren die beiden unmittelbar an das Druckbild **D** angrenzenden Schichten jeweils

- nicht auf einem Kaschierklebstoff, und/oder
- nicht auf einem Heiß-Siegel-Klebstoff (*hot melt*), und/oder
- nicht auf einem Lack, und/oder
- nicht auf einem orientierten Polymer (d.h. die Schichten sind nicht orientiert).

Besonders bevorzugt enthält die erfindungsgemäße Mehrschichtfolie überhaupt keine Schicht, die auf einem Kaschierklebstoff basiert bzw. überhaupt keine Schichten, welche durch eine Schicht basierend auf einem Kaschierklebstoff miteinander verbunden sind.

Einem Fachmann sind Kaschierklebstoffe bekannt. Ein "Kaschierklebstoff" im Sinne der Beschreibung ist bevorzugt definiert als ein Produkt, welches aufgrund seiner chemischen Zusammensetzung und seines physikalischen Zustands im Zeitpunkt des Auftragens zwischen zwei zu verbindenden Schichten eine Benetzung von deren Oberfläche ermöglicht und in der Klebefuge aufgrund physikalischer Vorgänge (z.B. Verdampfen leichtflüchtiger Lösungsmittel) und/oder chemischer Reaktionen (z.B. Ausbildung kovalenter Bindungen) aushärtet. Bevorzugt handelt es sich bei einem Kaschierklebstoff im getrockneten bzw. ausgehärteten Zustand um einen Duroplasten.

Bevorzugt handelt es sich bei einem "Kaschierklebstoff" im Sinne der Beschreibung um einen chemisch reagierenden Klebstoff, welcher kalt- oder warmhärtend sein kann, und Polymerisations-, Polyadditions- und Polykondensationsklebstoffe einschließt. Beispiele für Einkomponenten-Polymerisationsklebstoffe sind Cyanacrylatklebstoffe (Cyanacrylate) und Diacrylasäureester. Als Beispiel für einen Zweikomponenten-Polymerisationsklebstoff kann ein Methacrylatklebstoff genannt werden. Beispiele für Polyadditionsklebstoffe sind Epoxidharzklebstoffe und Polyurethanklebstoffe. Als Beispiele für Polykondensationsklebstoffe können Formaldehydkondensate, bestimmte Polyamide, bestimmte Polyester, Silikone, Polyimide, Polybenzimidazole und Polysulfone genannt werden, wobei diese üblicherweise nicht oder nur in Ausnahmefällen als Kaschierklebstoffe verwendet werden.

Eine weit verbreitete Gruppe der Kaschierklebstoffe bilden die bereits erwähnten Polyurethanklebstoffe, d.h. diejenigen Produkte, welche als freie funktionelle Gruppen Isocyanate (-NCO) enthalten. Ihre Klebewirkung beruht mitunter auf der chemischen Reaktion der Isocyanate mit Hydroxylgruppen oder anderen geeigneten funktionellen Gruppen, welche an der Oberfläche der zu verklebenden Schicht zur Verfügung stehen. Auf diese Weise kommt es zu einer kovalenten Verknüpfung zwischen dem Kaschierklebstoff und den Schichten, beispielsweise über UrethanGruppen (-O-CO-NH-). Auch sind Kaschierklebstoffe auf (Meth-)Acrylat-Basis recht verbreitet. Weitere funktionelle Gruppen, welche bei Kaschierklebstoffen an der Aushärtung beteiligt sein können, sind: $-NH_2$, $-CO_2H$, -CHO, -CN, -SH, -Cl, $-CH=CH_2$, $-CH_2CH=CH_2$ und -Epoxy.

Man unterscheidet einerseits zwischen Ein- und Mehrkomponentensystemen und andererseits zwischen Kaschierklebstoffen auf der Basis aliphatischer und/oder aromatischer Bausteine. Ferner unterscheidet man zwischen lösungsmittelhaltigen und lösungsmittelfreien Kaschierklebstoffen. Hinsichtlich weiterer Details kann beispielsweise vollumfänglich auf G. Habenicht, Kleben: Grundlagen, Technologie, Anwendungen, Springer Verlag, 1986 verwiesen werden.

Einem Fachmann sind Lacke bekannt. Ein "Lack" im Sinne der Beschreibung ist bevorzugt definiert als eine Flüssigkeit, die nach dem Eintrocknen eine feste, stabile, meist glänzende Schicht bildet und so die damit versehene Fläche schützt und ggf. schmückt. Bevorzugt handelt es sich um ein Produkt, welches aufgrund seiner chemischen Zusammensetzung und seines physikalischen Zustands im Zeitpunkt des Auftragens auf einer Schicht eine Benetzung von deren Oberfläche ermöglicht und aufgrund physikalischer Vorgänge (z.B. Verdampfen leichtflüchtiger Lösungsmittel) und/oder chemischer Reaktionen (z.B. Ausbildung kovalenter Bindungen) aushärtet.

Bevorzugt enthält die erfindungsgemäße Mehrschichtfolie - neben den Druckfarben, auf welchen das Druckbild **D** basiert - keinen Lack. Insbesondere bevorzugt enthält die erfindungsgemäße Mehrschichtfolie neben den Druckfarben keine weitere Substanz oder Zusammensetzung, die infolge chemischer Vorgänge und/oder durch Verdampfen eines Lösungsmittels bei der Herstellung der Mehrschichtfolie ausgehärtet wurde. Dies hat u.a. den Vorteil, dass die erfindungsgemäße Mehrschichtfolie recyclingfähig und für die Verpackung von Nahrungsmitteln geeignet ist.

Bevorzugt basiert keine der beiden unmittelbar an das Druckbild **D** angrenzenden Schichten auf einem orientierten Polymer, insbesondere nicht auf einem Polymer ausgewählt aus der Gruppe bestehend aus orientiertem Polypropylen, orientiertem Polyethylenterephthalat und orientiertem Polyamid. Bevorzugt enthält die erfindungsgemäße Folie überhaupt keine Schichten, welche auf einem orientierten Polymer basieren, d.h. überhaupt keine orientierten Schichten.

Die Orientierung von Polymeren durch Reckung einer Folie ist dem Fachmann geläufig. Werden thermoplastische Polymere bei Temperaturen verstreckt, bei denen die Moleküle noch aneinander entlang gleiten können, die Relaxationszeiten jedoch sehr viel größer sind als die Zeit, während der sie für den Verstreckungsprozess auf erhöhter Temperatur gehalten werden, so bleibt die im Zuge der Verstreckung erreichte Orientierung, d.h. die Ausrichtung der Polymerstränge in Verstreckungsrichtung, erhalten. Die Verstreckung hat bedeutende Eigenschaftsänderungen zur Folge, sowohl bei amorphen als auch bei teilkristallinen thermoplastischen Polymeren.

Im Hinblick auf die erfindungsgemäße Mehrschichtfolie bringt die Orientierung der Polymere jedoch unerwünschte Eigenschaftsänderungen mit sich. So sind im Stand der Technik beispielsweise Mehrschichtfolien bekannt, bei denen Schichten bedruckt sind, welche auf orientierten Polymeren basieren. Diese Verbunde sind jedoch nicht thermoformbar, insbesondere auch nicht tiefziehfähig, da sie bei der Thermoformung einreißen würden. Aus diesem Grund enthält die erfindungsgemäße Mehrschichtfolie bevorzugt überhaupt keine Schichten, die auf orientierten Polymeren basieren, z.B. auf mono- oder biaxial verstreckten Polymeren.

Bevorzugt basiert keine der beiden unmittelbar an das Druckbild **D** angrenzenden Schichten auf einem Heiß-Siegel-Klebstoff (*hot melt*). Bevorzugt enthält die erfindungsgemäße Folie überhaupt keine Schichten, welche auf einem Heiß-Siegel-Klebstoff basieren. Heiß-Siegel-Klebstoffe sind dem Fachmann bekannt. Üblicherweise werden unter Heiß-Siegel-Klebstoffen lösungsmittelfreie Klebstoffe verstanden, welche bei Temperaturen unterhalb von ca. 85°C fest sind und oberhalb von ca. 85°C Fluide geringer Viskosität sind, welche bei Kühlung schnell erhärten. Typische Heiß-Siegel-Klebstoffe basieren auf EVA Copolymerisaten, Styrol-Isopren-Styrol Copolymerisaten, Styrol-Butadien-Styrol Copolymerisaten und Ethylen-Ethylacrylat Copolymersiaten.

Erfindungsgemäß bevorzugt basiert zumindest eine der beiden unmittelbar an das Druckbild **D** angrenzenden Schichten, vorzugsweise basieren beide unmittelbar an das Druckbild **D** angrenzenden Schichten gleich oder verschieden auf einem Polymer ausgewählt aus der Gruppe bestehend aus Polyestern, Copolyestern, Polycarbonaten, Copolycarbonaten, Polyamiden, Copolyamiden, Polyolefinen und Olefin-Copolymerisaten, oder deren Mischung. Der Schmelzpunkt des Polymers liegt dabei bevorzugt im Bereich von 150 bis 330°C, bevorzugter 180 bis 300°C, noch bevorzugter 210 bis 270°C, am bevorzugtesten 220 bis 260°C und insbesondere 230 bis 250°C.

Polyester und Copolyester im Sinne der Beschreibung sind bevorzugt ausgewählt aus der Gruppe bestehend aus PET (insbesondere c-PET oder a-PET), CoPET, PBT und CoPBT. Mit "PET" wird Polyethylenterephthalat bezeichnet, welches aus Ethylenglykol und Terephthalsäure hergestellt werden kann. Ferner kann zwischen amorphem PET (a-PET) und kristallinem PET (c-PET) unterschieden werden. Mit "CoPET" werden Copolyester bezeichnet, die neben Ethylenglykol und Terephthalsäure noch weitere Monomere, wie z.B. verzweigte oder aromatische Diol-Glykole enthalten. Mit "PBT" wird Polybutylenterephthalat und mit "CoPBT" ein Copolyester des Polybutylenterephthalats bezeichnet. PBT kann aus Butan-1,4-diol und Terephthalsäure hergestellt werden. Bevorzugt weist der Polyester oder Copolyester eine intrinsische Viskosität von 0,1 bis 2,0 dl/g, bevorzugter 0,2 bis 1,7 dl/g, noch bevorzugter 0,3 bis 1,5 dl/g; am bevorzugtesten 0,4 bis 1,2 dl/g und insbesondere 0,6 bis 1,0 dl/g auf. Methoden zur Bestimmung der intrinsischen Viskosität sind dem Fachmann bekannt. Eine ausführliche Beschreibung von PET, PBT, Polycarbonaten (PC) und Copolycarbonaten (CoPC) findet man im Kunststoffhandbuch Band 3/1 - technische Thermoplaste: Polycarbonate, Polyacetale, Polyester, Celluloseester; Carl Hanser Verlag, 1992, auf dessen Inhalt vollumfänglich Bezug genommen wird. Im Sinne der Beschreibung umfasst die Abkürzung "(Co-)Polyester" sowohl Polyester als auch Copolyester.

Polyamide (PA) und Copolyamide (CoPA) im Sinne der Beschreibung sind bevorzugt aliphatisch oder (teil-) aromatisch. Bevorzugt ist das Polyamid aliphatisch. Bevorzugt weist das Polyamid oder Copolyamid einen Schmelzpunkt im Bereich von 160 bis 240°C, bevorzugter 170 bis 220°C auf. Bevorzugt ist das Polyamid oder Copolyamid ausgewählt aus der Gruppe bestehend aus PA 4, PA 6, PA 7, PA 8, PA 9, PA 10, PA 11, PA 12, PA 4,2, PA 6,6, PA 6,8, PA 6,9, PA 6,10, PA 6,12, PA 7,7, PA 8,8, PA 9,9, PA 10,9, PA 12,12, PA 6/6,6, PA 6,6/6, PA 6,2/6,2, und PA 6,6/6,9/6. PA 6 ist besonders bevorzugt. Eine ausführliche Beschreibung von PA und CoPA findet man im Kunststoff-Handbuch Band VI, Polyamide, Carl Hanser Verlag München, 1966; und Melvin I. Kohan, Nylon Plastics Handbook, Carl Hanser Verlag München, 1995, auf deren Inhalt vollumfänglich Bezug genommen wird. Im Sinne der Beschreibung umfasst die Abkürzung "(Co-)PA" sowohl Polyamide als auch Copolyamide.

Polyolefine und Olefin-Copolymerisate im Sinne der Beschreibung sind bevorzugt ausgewählt aus der Gruppe bestehend aus PE (insbesondere LDPE, LLDPE, HDPE oder mPE), PP, PI, PB, EAA, EVA, EPC, PMMA und I, bzw. deren Copolymerisaten. Im Sinne der Beschreibung umfasst die Abkürzung "(Co-)PP" sowohl Polypropylen als auch Propylen-Copolymerisate.

Mit "PE" wird Polyethylen, mit "PP" Polypropylen bezeichnet. Mit "LDPE" wird Polyethylen niedriger Dichte bezeichnet, welches eine Dichte im Bereich von 0,86-0,93 g/cm$^3$ aufweist und sich durch einen hohen Verzweigungsgrad der Moleküle auszeichnet. Eine Unterform von LDPE bildet lineares Polyethylen geringer Dichte (LLDPE), welches neben Ethylen als Comonomer ein oder mehrere α-Olefine mit mehr als 3 Kohlenstoffatomen enthält, z.B. But-1-en, Hex-1-en, 4-Methyl-pent-1-en und Oct-1-en. Aus der Copolymerisation der genannten Monomere ergibt sich die für LLDPE typische molekulare Struktur, die durch eine lineare Hauptkette mit daran befindlichen Seitenketten gekennzeichnet ist. Die Dichte variiert zwischen 0,86 und 0,94 g/cm$^3$. Der Schmelzflussindex MFR von auf Polyethylen basierenden Polymeren liegt bevorzugt zwischen 0,3 und 15 g/10 min (bei 190°C/2,16 kg Last, gemessen nach DIN EN ISO 1133). Der Schmelzflussindex MFR von auf Polypropylen basierenden Polymeren liegt bevorzugt zwischen 0,3 und 30 g/10 min (bei 230°C/2,16 kg Last, gemessen nach DIN EN ISO 1133). Mit "HDPE" wird Polyethylen hoher Dichte bezeichnet, weiches nur eine geringe Verzweigung der Molekülkette aufweist, wobei die Dichte im Bereich zwischen 0,94 und 0,97 g/cm$^3$ liegen kann. Mit "mPE" wird ein Ethylen-Copolymerisat bezeichnet, das mittels Metallocen-Katalysatoren polymerisiert wurde. Als Comonomer wird vorzugsweise ein α-Olefin mit 4 oder mehr Kohlenstoffatomen eingesetzt. Die Dichte liegt vorzugsweise zwischen 0,88 und 0,93 g/cm$^3$. Die Dispersität $M_w/M_n$ ist bevorzugt kleiner 3,5, vorzugsweise kleiner 3,0.

Mit "PI" wird Polyisobutylen, mit "PB" Polybutylen bezeichnet.

Mit "EAA" werden Copolymerisate aus Ethylen und Acrylsäure und mit "EMAA" Copolymerisate aus Ethylen und Methacrylsäure bezeichnet. Der Ethylengehalt liegt jeweils vorzugsweise zwischen 60 und 99 moi.-%.

Mit "EVA" wird ein Copolymerisat aus Ethylen und Vinylacetat bezeichnet. Der Ethylengehalt liegt vorzugsweise zwischen 60 und 99 mol.-%.

Als "EPC" werden Ethylen-Propylen-Copolymerisate mit 1-10 mol.-% Ethylen bezeichnet, wobei das Ethylen statistisch verteilt im Molekül vorliegt.

Unter "PMMA" werden Polymethylmethacrylat und dessen Copolymerisate verstanden.

Mit "I" werden auf Olefinen basierende Copolymerisate bezeichnet, deren Moleküle über lonenbindungen vernetzt sind (Ionomere). Die ionische Bindung erfolgt reversibel, was ein Auflösen der ionischen Bindung bei üblichen Verarbeitungstemperaturen (ca. 180-290°C) und eine erneute Ausbildung der ionischen Bindung in der Abkühlphase bewirkt. Üblicherweise werden als Polymere Copolymerisate aus Ethylen mit Acrylsäuren eingesetzt, die über Natrium- oder Zinkionen vernetzt sind, z.B. Surlyn®.

Erfindungsgemäß bevorzugt basiert eine der beiden unmittelbar an das Druckbild **D** angrenzenden Schichten auf (Co-)Polyester, d.h. auf Polyester, Copolyester, oder deren Mischung. Insbesondere bevorzugt basiert diese Schicht auf PET, vorzugsweise auf a-PET.

In einer bevorzugten Ausführungsform ist eine der beiden unmittelbar an das Druckbild **D** angrenzenden Schichten die Trägerschicht **T**. In diesem Fall sind bevorzugte Ausführungsformen der erfindungsgemäßen Mehrschichtfolie die folgenden Verbunde: **T-D-S T-D-Z//S T-D-$Z_1$//$Z_2$//S T-D-$Z_1$//$Z_2$//$Z_3$//S.**

In einer anderen bevorzugten Ausführungsform ist eine der beiden unmittelbar an das Druckbild **D** angrenzenden Schichten die Siegelschicht **S**. In diesem Fall sind bevorzugte Ausführungsformen der erfindungsgemäßen Mehrschichtfolie die folgenden Verbunde: **T-D-S T//Z-D-S T//$Z_1$//$Z_2$-D- S T//$Z_1$//$Z_2$//$Z_3$-D-S.**

Es ist aber auch möglich, dass es sich bei beiden unmittelbar an das Druckbild **D** angrenzenden Schichten um Zwischenschichten handelt. In diesem Fall sind bevorzugte Ausführungsform der erfindungsgemäßen Mehrschichtfolie die folgenden Verbunde: **T//$Z_1$-D- $Z_2$//S T//$Z_1$-D- $Z_2$//$Z_3$//S T//$Z_1$//$Z_2$-D-$Z_3$//S.**

Bevorzugt liegt das Verhältnis der

- Summe der Schichtdicken aller aufeinanderfolgender, ausgehend vom Druckbild **D** der Trägerschicht **T** zugewandter Schichten, d.h. der ggf. auf dieser Seite unmittelbar an das Druckbild **D** angrenzenden und den ggf. darüber liegende (n) Zwischenschicht(en) und der Trägerschicht **T** zur
- Summe der Schichtdicken aller aufeinanderfolgender, ausgehend vom Druckbild **D** der Siegelschicht **S** zugewandten Schichten, d.h. der ggf. auf dieser Seite unmittelbar an das Druckbild **D** angrenzenden und den ggf. darüber liegende (n) Zwischenschicht(en) und der Siegelschicht **S** im Bereich von 15:1 bis 1:15.

In einer bevorzugten Ausführungsform liegt das vorstehend definierte Verhältnis im Bereich von 15:1 bis 1:1, bevorzugter 10:1 bis 2:1, noch bevorzugter 9:1 bis 3:1, am bevorzugtesten 8:1 bis 4:1 und insbesondere 7:1 bis 3:1. Diese Ausführungsform ist insbesondere bevorzugt, wenn die Trägerschicht **T** auf einem Polyester oder Copolyester, insbesondere a-PET, basiert.

In einer anderen bevorzugten Ausführungsform liegt das vorstehend definierte Verhältnis im Bereich von 1:1 bis 1:10, bevorzugter 1:1,5 bis 1:9, noch bevorzugter 1:2 bis 1:8, am bevorzugtesten 1:2,5 bis 1:7 und insbesondere 1: 3 bis 1:5. Diese Ausführungsform ist insbesondere bevorzugt, wenn die Trägerschicht T auf einem Polypropylen, Propylen-Copolymerisat, Polyamid oder Copolyamid basiert.

Erfindungsgemäß bevorzugt beträgt die Verbundhaftung zwischen den beiden Schichten, welche unmittelbar an das Druckbild **D** angrenzen, wenigstens 4,0 N/15 mm, bevorzugter wenigstens 4,5 N/15 mm, noch bevorzugter wenigstens 5,0 N/15 mm, am bevorzugtesten wenigstens 6,0 N/15 mm und insbesondere wenigstens 7,0 N/15 mm, bestimmt in Anlehnung an DIN 53 357. Besonders bevorzugt beträgt die Verbundhaftung zwischen allen unmittelbar aneinander angrenzenden Schichten der erfindungsgemäßen Mehrschichtfolie wenigstens 4,0 N/15 mm, bevorzugter wenigstens 4,5 N/15 mm, noch bevorzugter wenigstens 5,0 N/15 mm, am bevorzugtesten wenigstens 6,0 N/15 mm und insbesondere wenigstens 7,0 N/15 mm, bestimmt in Anlehnung an DIN 53 357.

Erfindungsgemäß bevorzugt basiert die Trägerschicht **T** auf einem Polymer ausgewählt aus der Gruppe bestehend aus Polyestern, Copolyestern, Polycarbonaten, Copolycarbonaten, Polyamiden, Copolyamiden, Polyolefinen und Olefin-Copolymerisaten, oder deren Mischung. Besonders bevorzugt basiert die Trägerschicht **T** auf einem thermoplastischen Polymer ausgewählt aus der Gruppe bestehend aus PE (insbesondere HDPE), (Co-)PP, (Co-)Polyester (insbesondere PET oder PBT), PC, PMMA und (Co-)PA, oder deren Mischung.

Die Trägerschicht **T** weist vorzugsweise eine Schichtdicke von 20 bis 750 $\mu$m auf, bevorzugter 40 bis 500 $\mu$m, noch bevorzugter 60 bis 450 $\mu$m, am bevorzugtesten 80 bis 400 $\mu$m und insbesondere von 100 bis 350 $\mu$m.

In einer bevorzugten Ausführungsform der erfindungsgemäßen Mehrschichtfolie weisen die Trägerschicht **T** und alle ggf. vorhandenen Zwischenschichten **Z** gleich oder verschieden eine Schichtdicke von mehr als 20 $\mu$m, bevorzugter mehr als 25 $\mu$m, noch bevorzugter mehr als 30 $\mu$m, am bevorzugtesten mehr als 35 $\mu$m und insbesondere mehr als 40 $\mu$m auf. Ist die Siegelschicht **S** einlagig, so kann sie bei dieser Ausführungsform eine Schichtdicke von weniger als 20 $\mu$m aufweisen. Ist die Siegelschicht **S** jedoch mehrlagig, so weist sie bei dieser Ausführungsform bevorzugt ebenfalls eine Schichtdicke von mehr als 20 $\mu$m, bevorzugter mehr als 25 $\mu$m, noch bevorzugter mehr als 30 $\mu$m, am bevorzugtesten mehr als 35 $\mu$m und insbesondere mehr als 40 $\mu$m auf.

Die Siegelschicht S der erfindungsgemäßen Mehrschichtfolie ist siegelbar, bevorzugt heißsiegelbar. Der Siegelvorgang wird beispielsweise in Hernandez/Selke/Culter: Plastics Packaging, Carl Hanser Verlag, München, 2000 beschrieben.

Erfindungsgemäß bevorzugt basiert die Siegelschicht **S** auf wenigstens einem Polymer ausgewählt aus der Gruppe bestehend aus Polyolefinen, Olefin-Copolymerisaten und deren Mischung. Die für die Herstellung der Siegelschicht **S** verwendeten Polymere sind zur Herstellung von Schichten, die mit Nahrungsmitteln in Kontakt kommen, zugelassen. In einer bevorzugten Ausführung ist die Siegelschicht S einlagig und basiert bevorzugt auf wenigstens einem Polyolefin ausgewählt aus der Gruppe bestehend aus mPE, HDPE, LDPE, LLDPE, EVA, EAA, I (bevorzugt Surlyn®, z.B. mit Zinkionen), PP, vorzugsweise homo-PP, und Propylen-Copolymerisat, oder deren Mischung. In einer anderen bevorzugten Ausführungsform ist die Siegelschicht **S** mehrlagig, bevorzugt zwei-, drei-, vier-, fünf-, sechs-, sieben- oder achtlagig, wobei bevorzugt zumindest eine der beiden Oberflächenlagen auf einem der vorstehend genannten Polymere basiert. Die Siegeltemperaturen liegen vorzugsweise im Bereich von 100°C bis 164°C. Die Schmelztemperatur der Siegelschicht S beträgt vorzugsweise 90 bis 164°C, besonders bevorzugt 95°C bis 130 °C. Die Siegelschicht **S** kann mit den üblichen Hilfsstoffen wie Antistatika, Gleitmitteln, Slipmitteln, Antiblockmitteln, Antifogmitteln und/oder Abstandshaltern ausgerüstet werden.

In einer bevorzugten Ausführungsform der erfindungsgemäßen Mehrschichtfolie ist die Siegelschicht **S** mehrlagig **($S_1$/.../$S_i$)**. In diesem Fall basiert vorzugsweise wenigstens diejenige Lage der Sigelschicht **S,** welche die Oberflächenlage der erfindungsgemäßen Mehrschichtfolie bildet, auf wenigstens einem Polyolefin ausgewählt aus der Gruppe bestehend aus mPE, HDPE, LDPE, LLDPE, EVA, EAA, I (bevorzugt Surlyn®, z.B. mit Zinkionen), PP, vorzugsweise homo-PP, und Propylen-Copolymerisat, oder deren Mischung. Eine mehrlagige Siegelschicht **S** kann beispielsweise durch Coextrusion hergestellt werden. Bevorzugt enthält die mehrlagige Siegelschicht **S** eine peelbare Oberflächenlage und/oder als Zwischenlage eine Barrierelage.

Der Fachmann weiß, wodurch eine mehrlagige Siegelschicht **S** gekennzeichnet ist.

In einer bevorzugten Ausführungsform der erfindungsgemäßen Mehrschichtfolie bildet die Siegelschicht **S** eine der beiden unmittelbar an das Druckbild **D** angrenzenden Schichten. Ist die Siegelschicht **S** mehrlagig, so grenzt eine der beiden äußeren Lagen der mehrlagigen Siegelschicht **S** unmittelbar an das Druckbild **D** an. Dies ist beispielsweise für die Lage **$S_1$** in dem Verbund **T//Z-D-($S_1$/$S_2$/$S_3$)** der Fall. Dabei ist zu beachten, dass die Dicke der Lage **$S_1$** der mehrlagigen Siegelschicht S, welche unmittelbar an das Druckbild **D** angrenzt, in Ausnahmefällen 2,0 $\mu$m oder weniger betragen kann, solange die Schichtdicke der Siegelschicht **S** insgesamt mehr als 2,0 $\mu$m beträgt. Eine solche Mehrschichtfolie, bei der beispielsweise jede der Lagen **$S_1$** bis **$S_3$** eine Dicke von 1,8 $\mu$m aufweist, ist daher als erfindungsgemäß aufzufassen, da die Schichtdicke der unmittelbar an das Druckbild **-D-** angrenzenden Siegelschicht **S** insgesamt 5,4 $\mu$m beträgt. In diesem Fall bildet die Lage **$S_1$** keine eigenständige Schicht der Mehrschichtfolie, sondern ist als Bestandteil der mehrlagigen Siegelschicht **S** aufzufassen. Bevorzugt weist jedoch auch in diesem Fall die Lage $S_1$ eine Dicke von mehr als 2,0 $\mu$m, bevorzugt $\geq$ 2,5 $\mu$m, $\geq$ 3,0 $\mu$m, $\geq$ 3,5 $\mu$m, $\geq$ 4,0 $\mu$m, $\geq$ 4,5 $\mu$m oder $\geq$ 5,0 $\mu$m, bevorzugt mindestens 7,5 $\mu$m, bevorzugter mindestens 10 $\mu$m, noch bevorzugter mindestens 15 $\mu$m, am bevorzugtesten mindestens 20 $\mu$m und insbesondere mindestens 25 $\mu$m auf.

In einer besonders bevorzugten Ausführungsform der erfindungemäßen Mehrschichtfolie weisen sowohl alle Schichten als auch alle Lagen eine Dicke von mindestens 2,0 $\mu$m, bevorzugt $\geq$ 2,5 $\mu$m, $\geq$ 3,0 $\mu$m, $\geq$ 3,5 $\mu$m, $\geq$ 4,0 $\mu$m, $\geq$ 4,5 $\mu$m oder $\geq$ 5,0 $\mu$m, bevorzugt mindestens 7,5 $\mu$m, bevorzugter mindestens 10 $\mu$m, noch bevorzugter mindestens 15 $\mu$m, am bevorzugtesten mindestens 20 $\mu$m und insbesondere mindestens 25 $\mu$m auf.

Umfasst die Siegelschicht S der erfindungsgemäßen Mehrschichtfolie i Lagen und grenzt das Druckbild **D** unmittelbar an die Siegelschicht an **(T//...-D-($S_1$/.../$S_i$))**, so basiert die Lage **$S_1$** der Siegelschicht **S** bevorzugt auf einem Polymer ausgewählt aus der Gruppe bestehend aus Polyestern, Copolyestern, Polycarbonaten, Copolycarbonaten, Polyamiden, Copolyamiden, Polyolefinen und Olefin-Copolymerisaten, oder deren Mischung. Vorzugsweise ist das Polymer, auf dem in diesem Fall die Lage $S_1$ basiert, ausgewählt aus der Gruppe bestehend aus PE, LDPE, [LLDPE+LDPE], [LDPE+EVA], mPE, PP, HV, EAA, EVA, EMAA, PA, CoPA, CoPET oder PBT.

In einer bevorzugten Ausführungsform ist die Siegelschicht **S** mehrlagig und weisen

- bevorzugt alle Schichten der erfindungsgemäßen Mehrschichtfolie gleich oder verschieden eine Schichtdicke von mehr als 20 $\mu$m und alle Lagen der mehrlagigen Siegelschicht **S** gleich oder verschieden eine Dicke von 20 $\mu$m oder weniger auf;
- bevorzugter alle Schichten der erfindungsgemäßen Mehrschichtfolie gleich oder verschieden eine Schichtdicke von mehr als 15 $\mu$m und alle Lagen der mehrlagigen Siegelschicht **S** gleich oder verschieden eine Dicke von 15 $\mu$m oder weniger auf; oder
- noch bevorzugter alle Schichten der erfindungsgemäßen Mehrschichtfolie gleich oder verschieden eine Schichtdicke von mehr als 10 $\mu$m und alle Lagen der mehrlagigen Siegelschicht **S** gleich oder verschieden eine Dicke von 10 $\mu$m oder weniger auf.

Bei den vorstehend aufgeführten Ausführungsformen kann das Vorliegen einer Lage bzw. einer Schicht vorzugsweise lediglich anhand der jeweiligen Dicke des Materials bestimmt werden: beträgt die Dicke mehr als 20 $\mu$m, bevorzugter mehr als 15 $\mu$m bzw. noch bevorzugter mehr als 10 $\mu$m, so handelt es sich um eine Schicht, beträgt die Dicke 20 $\mu$m oder weniger, bevorzugter 15 $\mu$m oder weniger bzw. noch bevorzugter 10 $\mu$m oder weniger, so handelt es sich um eine Lage.

Die ggf. vorhandene Barrierelage der Siegelschicht S ist vorzugsweise gas- und/oder aromadicht. Auch kann die Barrierelage Schutz vor Feuchtigkeit bieten und/oder die Migration niedermolekularer Bestandteile der Mehrschichtfolie in das Verpackungsgut verhindern. Bevorzugt beträgt die Gasdichtigkeit der erfindungsgemäßen Mehrschichtfolie, bestimmt gemäß DIN 53380, weniger als 5,0, bevorzugter weniger als 4,0 und insbesondere weniger als 2,0 [$cm^3$/$m^2$

d bar O$_2$].

Vorzugsweise basiert die ggf. vorhandene Barrierelage der Siegelschicht S auf wenigstens einem Polymer ausgewählt aus der Gruppe umfassend Ethylen-Vinylalkohol-Copolymerisat (EVOH); Polyvinylidenchlorid (PVDC); Vinylidenchlorid-Copolymerisat, vorzugsweise mit einem Anteil des Vinylidenchlorids von 80% oder mehr, vorzugsweise Saran®, ggf. auch als Blend mit anderen Polymeren, wie EVA; Polyester und Polyamid; bevorzugt auf Ethylen-Vinylalkohol-Copolymerisat. Die ggf. vorhandene Barrierelage ist gas- und/oder aromadicht, insbesondere sollte sie sowohl für Sauerstoff als auch für Wasserdampf weitgehend undurchlässig sein.

Die ggf. vorhandene Barrierelage weist vorzugsweise eine Dicke von 0,5 bis 50 μm auf, bevorzugter 1,0 bis 40 μm, noch bevorzugter 1,5 bis 30 μm, am bevorzugtesten 2,0 bis 10 μm und insbesondere von 2,5 bis 7,5 μm.

An die ggf. vorhandene Barrierelage grenzt erfindungsgemäß bevorzugt auf einer oder beiden Seiten jeweils eine Lage basierend auf einem Polyamid (Polyamidlage) und/oder auf einem Haftvermittler (Haftvermittlerlage).

Bei Haftvermittlern (HV) handelt es sich um coextrudierbare, haftvermittelnde Polymere. Bevorzugt handelt es sich um modifizierte Polyolefine, wie z.B. LDPE, LLDPE, mPE, EVA, EAA, EMAA, (Co-)PP, EPC, die mit mindestens einem Monomer aus der Gruppe α,β-einfach ungesättiger Dicarbonsäuren, wie z.B. Maleinsäure, Fumarsäure, Itaconsäure, oder deren Anhydriden, Estem, Amiden oder Imiden, gepfropft sind. Daneben können Copolymerisate von Ethylen mit α,β-einfach ungesättigten Monocarbonsäuren, wie Acrylsäure, Methacrylsäure und/oder deren Metallsalze mit Zink oder Natrium und/oder deren C$_1$-C$_4$-Alkylester zum Einsatz kommen, wobei sie zusätzlich auch mit mindestens einem Monomer aus der Gruppe a,β-einfach ungesättiger Dicarbonsäuren, wie z.B. Maleinsäure, Fumarsäure, Itaconsäure, oder deren Anhydriden, Estem, Amiden oder Imiden, gepfropft sein können. Des weiteren können auch Polyolefine wie z.B. PE, PP, Ethylen/Propylen-Copolymerisate oder Ethylen/α-Olefin-Copolymerisate verwendet werden, die mit Copolymerisaten von Ethylen mit α,β-einfach ungesättigten Monocarbonsäuren, wie Acrylsäure, Methacrylsäure und/oder deren Metallsalzen mit Zink oder Natrium und/oder deren C$_1$-C$_4$-Alkylestern gepfropft sind. Besonders geeignet als Haftvermittler sind Polyolefine, insbesondere Ethylen/α-Olefin-Copolymerisate mit aufgepfropftem α,β-einfach ungesättigtem Dicarbonsäureanhydrid, insbesondere Maleinsäureanhydrid. Die Haftvermittler können auch ein Ethylen/Vinylacetat-Copolymerisat (EVA), vorzugsweise mit einem Vinylacetatgehalt von wenigstens 10 Gew.-% enthalten.

Die ggf. vorhandene(n) Haftvermittlerlage(n) weist(weisen) vorzugsweise gleich oder verschieden eine Dicke von 0,1 bis 25 μm auf, bevorzugter 0,2 bis 15 μm, noch bevorzugter 0,5 bis 10 μm, am bevorzugtesten 1,0 bis 7,5 μm und insbesondere von 2,0 bis 5,0 μm.

Die ggf. vorhandene(n) Polyamidlage(n) weist(weisen) vorzugsweise gleich oder verschieden eine Dicke von 0,1 bis 25 μm auf, bevorzugter 0,2 bis 15 μm, noch bevorzugter 0,5 bis 10 μm, am bevorzugtesten 1,0 bis 7,5 μm und insbesondere von 2,0 bis 5,0 μm.

Die Abfolge der einzelnen Lagen innerhalb der Siegelschicht **S** kann durch die Schreibweise **"(S$_1$/S$_2$/.../S$_n$)** ausgedrückt werden. Einzelne Lagen **S$_i$** können dabei näher durch das Polymer, auf dem sie basieren, spezifiziert werden, z.B. mit "HV" für einen Haftvermittler, "PA" für Polyamid und "EVOH" für Ethylen-Vinylalkohol-Copolymerisat. Eine siebenlagige Siegelschicht **S**, bei der eine zentrale Barrierelage aus Ethylen-Vinylalkohol-Copolymerisat jeweils von einer Polyamidlage und daran angrenzend von jeweils einer Haftvermittlerlage flankiert wird, wird somit einerseits allgemein durch die Schreibweise **"(S$_1$/S$_2$/S$_3$/S$_4$/S$_5$/S$_6$/S$_7$)"** umfasst, andererseits kann sie aber auch durch die Schreibweise "(S$_1$/HV/PA/EVOH/PA/HV/S$_2$)" spezifiziert werden.

Bevorzugte mehrlagige Siegelschichten S haben folgenden Aufbau, wobei "..." die Anbindung an den die Trägerschicht T und das Druckbild D enthaltenden Rest der Mehrschichtfolie markiert:

...(**S$_1$**/**S$_2$**)       ...(**S$_1$**/EVOH/**S$_2$**))       ...(**S$_1$**/PA/**S$_2$**))       ...(**S$_1$**/**S$_2$**/EVOH/**S$_3$**/**S$_4$**)
...(**S$_1$**/HV/EVOH/HV/**S$_2$**))       ...(**S$_1$**/PA/EVOH/PA/**S$_2$**))       ...(**S$_1$**/HV/PA/HV/**S$_2$**)
...(**S$_1$**/HV/EVOH/HV/**S$_2$**/**S$_3$**))       ...(**S$_1$**/**S$_2$**/HV/EVOH/HV/**S$_3$**)
...(**S$_1$**/HV/PA/EVOH/PA/HV/**S$_2$**))       ...(**S$_1$**/HV/PA/EVOH/PA/HV/**S$_2$**/**S$_3$**).

Besonders bevorzugte mehrlagige Siegelschichten **S** umfassen einzelne Lagen basierend auf Polymeren, welche im folgenden aufgeführt sind, wobei Polymermischungen in eckige Klammern gesetzt und durch ein "+" verbunden sind:

| | |
|---|---|
| ...(PE) | ...(HV/PA/HV/LDPE/LLDPE) |
| ...(LDPE) | ...(HV/EVOH/HV/LDPE/[LDPE+PB]) |
| ...([LLDPE+LDPE]) | ...(PE/HV/EVOH/HV/PE/[LDPE+PB]) |
| ...([LDPE+EVA]) | ...(PE/HV/EVOH/HV/LDPE/[LDPE+PB]) |
| ...(LDPE/HV/EVOH/HV/I) | ...(EAA/LDPE/EVA) |
| ...(PP) | ...(EVA/LDPE/HDPE/([LDPE+LLDPE]) |
| ...(HV/PE) | ...(EVA/HV/EVOH/HV/PE) |
| ...(HV/LDPE) | ...(EMAA/LDPE/mPE) |
| ...(HV/[LLDPE+LDPE]) | ...(PA/HV/PP) |

(fortgesetzt)

| | |
|---|---|
| ...(HV/HDPE) | ...(CoPA/HV/PP) |
| ...(HV/LDPE/[mPE+LDPE]) | ...(CoPA/HV/LDPE) |
| ...(HV/LDPE/EVA) | ...(CoPA/HV/mPE/LDPE) |
| ...(HV/HDPE/EVA) | ...(CoPET/HV/PP) |
| ...(HV/I) | ...(CoPET/HV/LDPE) |
| ...(HV/PP) | ...(CoPET/HV/LDPE/mPE) |
| ...(HV/[PP+PB]/mPE) | ...(PP/HV/PA/HV/HDPE) |
| ...(HV/EAA/I) | ...(PP/HV/PA/EVOH/PA/HV/[LDPE+mPE]) |
| ...(HV/EVA/LDPE/mPE) | ...(EVA/PE/HV/EVOH/HV/PE/[LDPE+PB]) |
| ...(HV/LDPE/HDPE/LDPE/mPE) | ...(mPE/HV/PA/HV/mPE) |
| ...(HV/mPE/PP/mPE/LDPE) | ...(PBT/HV/LDPE). |

Die Siegelschicht **S** weist vorzugsweise eine Schichtdicke von insgesamt 1,0 bis 100 $\mu$m auf, bevorzugter 5,0 bis 80 $\mu$m, noch bevorzugter 10 bis 70 $\mu$m, am bevorzugtesten 20 bis 60 $\mu$m und insbesondere 30 bis 50 $\mu$m. Ist die Siegelschicht **S** mehrlagig, so beziehen sich die vorstehenden Angaben auf die Summe über alle Lagen.

In einer bevorzugten Ausführungsform der erfindungsgemäßen Mehrschichtfolie ist die Siegelschicht **S** peelbar, in einer anderen bevorzugten Ausführungsform ist sie nicht peelbar.

In einer bevorzugten Ausführungsform der erfindungsgemäßen Mehrschichtfolie sind zwischen der Trägerschicht **T** und der Siegelschicht **S** eine oder mehrere Zwischenschichten angeordnet, gleich oder verschieden basierend auf einem Polymer ausgewählt aus der Gruppe bestehend aus Polyestern, Copolyestern, Polycarbonaten, Copolycarbonaten, Polyamiden, Copolyamiden, Polyolefinen, modifizierten Polyolefinen (z.B. haftvermittelnden Polyolefinen) und Olefin-Copolymerisaten (z.B. Ethylen-Vinylalkohol-Copolymerisat), oder deren Mischung. Insbesondere können die Zwischenschichten unabhängig voneinander auch auf denjenigen Polymeren basieren, welche vorstehend für die einzelnen Lagen der ggf. mehrlagigen Siegelschicht **S** aufgeführt wurden.

Bevorzugt ist eine Zwischenschicht **Z** oder sind zwei Zwischenschichten $Z_1$ und $Z_2$ vorhanden. Es sind aber auch Ausführungsformen mit drei, vier, fünf, sechs und mehr Zwischenschichten denkbar.

Besonders bevorzugte Mehrschichtfolien sind im folgenden aufgeführt:

| T-D-S | T-D-Z//S | T-D-$Z_1$//$Z_2$//S |
|---|---|---|
| PET-**D-S** | PC-**D**-PC//**S** | PET-**D**-PET//EVA//**S** |
| PBT-**D-S** | PMMA-**D**-PMMA//**S** | PET-**D**-PBT//EVA//**S** |
| PP-**D-S** | PMMA-**D**-PC//**S** | PA-**D**-PA//EVA//**S** |
| PE-**D-S** | PC-**D**-PMMA//**S** | PA-**D**-PET//EVA//**S** |
| HDPE-**D-S** | PET-**D**-PET//**S** | PET-**D**-PA//EVA//**S** |
| LDPE-**D-S** | PBT-**D**-PBT//**S** | PP-**D**-PP//EVA//**S** |
| PA-**D-S** | PBT-**D**-PET//**S** | PE-**D**-PE//EVA//**S** |
| PC-**D-S** | PET-**D**-PBT//**S** | PE-**D**-PP//EVA//**S** |
| PMMA-**D-S** | PA-**D**-PA//**S** | PP-**D**-PE//EVA//**S** |

bzw.

| T//Z-D-S | T//$Z_1$//$Z_2$-D-S | T-$D_1$-Z-$D_2$-S |
|---|---|---|
| PET//PET-**D-S** | PET//PET//PET-**D-S** | PET-$D_1$-PET-$D_2$-S |
| PBT//PBT-**D-S** | PBT//PBT//PBT-**D-S** | PBT-$D_1$-PBT-$D_2$-S |
| PET//PBT-**D-S** | PET//PBT//PET-**D-S** | PBT-$D_1$-PET-$D_2$-S |
| PBT//PET-**D-S** | PBT//PET//PBT-**D-S** | PET-$D_1$-PBT-$D_2$-S |
| PMMA//PMMA-**D-S** | PMMA//PMMA//PMMA-**D-S** | PMMA-$D_1$-PMMA-$D_2$-S |
| PP//PP-**D-S** | PP//PP//PP-**D-S** | PP-$D_1$-PP-$D_2$-S |
| PE//PP-**D-S** | PE//PP//PE-**D-S** | PP-$D_1$-PE-$D_2$-S |
| PP//PE-**D-S** | PP//PE//PP-**D-S** | PE-$D_1$-PA-$D_2$-S |
| PE//PE-**D-S** | PE//PE//PE-**D-S** | **PA-$D_1$-PE-$D_2$-S** |

In einer bevorzugten Ausführungsform beträgt die Gesamtschichtdicke der erfindungsgemäßen Mehrschichtfolie mindestens 50 $\mu$m, bevorzugter mindestens 75 $\mu$m, bevorzugter mindestens 100 $\mu$m, noch bevorzugter mindestens 125 $\mu$m, noch bevorzugter 150 $\mu$m, am bevorzugtesten mindestens 175 $\mu$m und insbesondere mindestens 200 $\mu$m. In einer bevorzugten Ausführungsform liegt die Gesamtschichtdicke der erfindungsgemäßen Mehrschichtfolie im Bereich von 50 bis 1.500 $\mu$m, bevorzugter 100 bis 1.200 $\mu$m, noch bevorzugter 150 bis 1.000 $\mu$m, am bevorzugtesten 200 bis 800 $\mu$m und insbesondere 250 bis 600 $\mu$m.

Bevorzugt umfasst die erfindungsgemäße Mehrschichtfolie nur zwei Schichten, nämlich eine mehrlagige Siegelschicht **S** und eine Trägerschicht **T (T-D-S),** wobei besonders bevorzugte Ausführungsformen in folgender Tabelle zusammengefasst sind:

|  | bevorzugt | bevorzugter | insbesondere |
|---|---|---|---|
| Siegelschicht **S** | | | |
| - Abfolge der Lagen | $S_1$/HV/EVOH/HV/$S_2$ | $S_1$/HV/EVOH/HV/$S_2$ | PE/HWEVOH/HV/EVA |
| - Schichtdicke | 5,0 bis 80 $\mu$m | 20 bis 60 $\mu$m | 30 bis 50 $\mu$m |
| Trägerschicht **T** | | | |
| - basierend auf | (Co-)Polyester, (Co-) PA, oder (Co-)PP | (Co-)Polyester, (Co-) PA, oder (Co-)PP | PET, (Co-)PA, oder (Co-)PP |
| - Schichtdicke | 100 bis 750 $\mu$m | 120 bis 400 $\mu$m | 150 bis 350 $\mu$m |

In einer anderen bevorzugten Ausführungsform umfasst die erfindungsgemäße Mehrschichtfolie zwischen der Siegelschicht **S** und der Trägerschicht **T** wenigstens eine Zwischenschicht **Z;** wenigstens zwei Zwischenschichten $Z_1$ und $Z_2$; wenigstens drei Zwischenschichten $Z_1$, $Z_2$ und $Z_3$; wenigstens vier Zwischenschichten $Z_1$, $Z_2$, $Z_3$ und $Z_4$; oder wenigstens fünf Zwischenschichten $Z_1$, $Z_2$, $Z_3$. $Z_4$ und $Z_5$; wobei diese Zwischenschichten dabei gleich oder verschieden auf Polymeren basieren ausgewählt aus der Gruppe bestehend aus Polyestern, Copolyestern, Polycarbonaten, Copolycarbonaten, Polyamiden, Copolyamiden, Polyolefinen, modifizierten Polyolefinen (z.B. haftvermittelnden Polyolefinen) und Olefin-Copolymerisaten (z.B. Ethylen-Vinylalkohol-Copolymerisat), oder deren Mischung.

Die erfindungsgemäßen Mehrschichtfolien sind durch verschiedene Verfahren herstellbar. Bevorzugt werden zunächst einzelne Schichten oder deren Verbunde vorgefertigt, bedruckt und anschließend zur erfindungsgemäßen Mehrschichtfolie zusammengefügt.

Demnach umfasst ein bevorzugtes Verfahren zur Herstellung der erfindungsgemäßen, thermoformbaren Mehrschichtfolie bevorzugt die Schritte

(a) Bedrucken zumindest eines Teils der Fläche zumindest einer Seite einer Folie, welche ggf. mehrere Schichten umfasst; und

(b) Aufbringen einer Polymerschicht auf die Fläche der Folie, von der in Schritt (a) zumindest ein Teil bedruckt wurde; wobei sowohl die in Schritt (a) bedruckte Folie als auch die in Schritt (b) aufgebrachte Polymerschicht eine Schichtdicke von mehr als 2,0 $\mu$m, bevorzugt $\geq$ 2,5 $\mu$m, $\geq$ 3,0 $\mu$m, $\geq$ 3,5 $\mu$m, $\geq$ 4,0 $\mu$m, $\geq$ 4,5 $\mu$m oder $\geq$ 5,0 $\mu$m, bevorzugt mindestens 7,5 $\mu$m, bevorzugter mindestens 10 $\mu$m, noch bevorzugter mindestens 15 $\mu$m, am bevorzugtesten mindestens 20 $\mu$m und insbesondere mindestens 25 $\mu$m aufweisen.

In einer bevorzugten Ausführungsform des erfindungsgemäßen Verfahrens basiert die in Schritt (b) aufgebrachte Polymerschicht

- nicht auf einem Kaschierklebstoff, und/oder
- nicht auf einem Heiß-Siegel-Klebstoff (*hot melt*), und/oder
- nicht auf einem Lack, und/oder
- nicht auf einem orientierten Polymer (d.h. die Polymerschicht ist nicht orientiert).

Zum Bedrucken der Folie in Schritt (a) sind übliche Verfahren, wie z.B. Flexodruck oder Tiefdruck geeignet. Die verschiedenen Verfahren zur Druckbild von Folien werden ausführlich beschrieben in "Tiefdruck, Hrg. Bem Ollech, Polygraph Verlag, Frankfurt 1993" und "Offset Drucktechnik, Helmut Teschner, Fachschriftenverlag Fellbach, 8. Auflage, 1991". Auch geeignete Druckfarben werden darin ausführlich beschrieben.

Schritt (b) erfolgt bevorzugt

- entweder als Extrusionskaschierung
- oder als Extrusionsbeschichtung.

Bei der Extrusionsbeschichtung wird ein relativ warmer Polymerfilm auf eine relativ kalte vorgefertigte Folie extrudiert. In diesem Zusammenhang kann z.B. verwiesen werden auf L. Piffer, Introduction to extrusion coating equipment for engineers, 2001 TAPPI American PLACE Conference; M. Andreoli, Extrusion coating as an effective method for coating and laminating, 2003 TAPPI 9th European PLACE Conference, May 12-14, Rome; K. Krumm, Directextrusion - a new challenge for economical coating, 2003 TAPPI 9th European PLACE Conference, May 12-14, Rome.

Bei der Extrusionskaschierung, welche auch als "Sandwich-Verfahren" bezeichnet wird, handelt es sich um eine Erweiterung der Extrusionsbeschichtung, bei der eine Polymerschmelze zwischen zwei vorgefertigte Folien extrudiert wird, so dass beide Oberflächenseiten der extrudierten Polymerschmelze von den vorgefertigten Folien umgeben werden. Die Polymerschmelze härtet dabei jedoch nicht chemisch aus, so dass die Verbundfolie thermoformbar bleibt. Insbesondere handelt es sich bei der Polymerschmelze um keinen Kaschierklebstoff.

Wird nur eine einzelne Schicht auf die in Schritt (a) zumindest teilweise bedruckte Fläche aufgebracht, so erfolgt Schritt (b) bevorzugt durch Extrusionsbeschichtung. Dem Fachmann ist geläufig, wie dies realisiert werden kann.

Bei einer bevorzugten Ausführungsform dieses Typs wird

- auf eine Seite der Trägerschicht **T,**
- auf eine Seite der Siegelschicht **S,**
- auf die freie Seite der Zwischenschicht $Z_n$ des Verbunds $T//Z_1//...//Z_n$ oder
- auf die freie Seite der Zwischenschicht $Z_1$ des Verbunds $Z_1//...//Z_n//S$ ein Druckbild **D** aufgebracht, wodurch
- eine Trägerschicht **T** mit einseitigem Druckbild **D (T-D),**
- eine Siegelschicht **S** mit einseitigem Druckbild **D (D-S),**
- ein Verbund umfassend die Trägerschicht **T** mit einseitigem Druckbild **D ($T//Z_1//...//Z_n$-D)** bzw.
- ein Verbund umfassend die Siegelschicht **S** mit einseitigem Druckbild **D ($D-Z_1//...//Z_n//S$)**

erhalten wird.

Bei der Extrusionsbeschichtung wird nun eine einzelne, ggf. mehrlagige, Schicht auf das Druckbild **D** aufgebracht, so dass eine Mehrschichtfolie mit innenliegendem Druckbild **D** entsteht. Für die vorstehenden Beispiele kann dies wie folgt dargestellt werden:

- **T-D + S -> T-D-S**
- **T + D-S -> T-D-S**
- **$T//Z_1//...//Z_n$-D + S -> $T//Z_1//...//Z_n$-D-S**
- **$T + D-Z_1//...//Z_n//S$ -> $T-D-Z_1//...//Z_n//S$.**

Es ist jedoch auch möglich, gleichzeitig oder nacheinander mehrere Schichten durch Extrusionsbeschichtung aufzubringen.

Werden mehrere Schichten auf die in Schritt (a) zumindest teilweise bedruckte Fläche aufgebracht, so erfolgt Schritt (b) bevorzugt als Extrusionskaschierung. Dabei wird zunächst ein Verbund aus mehreren Schichten vorgefertigt und mit dem Druckbild **D** versehen (vgl. Beispiele oben). Im Unterschied zur Extrusionskaschierung wird nun eine weitere Folie oder ggf. ein weiterer Verbund separat hergestellt, welcher bereits alle noch fehlenden Schichten umfasst, bis auf diejenige Schicht, welche in der erfindungsgemäßen Mehrschichtfolie unmittelbar auf der anderen Seite an das Druckbild **D** angrenzen soll.

Die noch fehlende Schicht wird dann zwischen die bedruckte Folie bzw. den bedruckten Verbund und die zweite separat hergestellt Folie bzw. den zweiten vorgefertigten Verbund extrudiert. Beispielsweise kann die Zwischenschicht **Z** zwischen die vorgefertigte bedruckte Trägerschicht **T-D** und die vorgefertigte Siegelschicht S extrudiert werden:

$$\text{T-D} \quad + \quad \text{Z} \quad + \quad \text{S} \quad \text{->} \quad \text{T-D-Z//S.}$$

Andere beispielhafte Realisierungsmöglichkeiten sind:

- **$T-D + Z_1 + Z_2//S$ -> $T-D-Z_1//Z_2//S$**
- **$T//Z_1-D + Z_2 + Z_3//S$ -> $T//Z_1-D-Z_2//Z_3//S$**
- **$T + Z_1 + D-Z_2//S$ -> $T//Z_1-D-Z_2//S$.**

Enthält die erfindungsgemäße Mehrschichtfolie zwei verschiedene bedruckte Schichten, deren Fläche jeweils zumindest teilweise bedruckt ist, und damit zwei Druckbilder $D_1$ und $D_2$, so werden bevorzugt in zwei getrennten Schritten (a) zunächst zwei bedruckte ggf. mehrschichtige Verbunde hergestellt, zwischen die dann in Schritt (b) die noch fehlende Zwischenschicht extrudiert wird, wobei dabei bevorzugt beide Druckbilden $D_1$ und $D_2$ nach innen weisen, z.B.:

$$\text{T-}D_1 \quad + \quad Z_1 \quad + \quad D_2\text{-}Z_2/\!/S \quad \text{->} \quad \text{T-}D_1\text{-}Z_1\text{-}D_2\text{-}Z_2/\!/S$$

Die Erfindung betrifft auch eine Mehrschichtfolie, welche nach einem vorstehend beschriebenen Verfahren erhältlich ist.

Ein weiterer Aspekt der Erfindung betrifft eine Verpackung umfassend eine vorstehend beschriebene Mehrschichtfolie.

In einer bevorzugten Ausführungsform der erfindungsgemäßen Verpackung ist die Mehrschichtfolie thermogeformt, vorzugsweise tiefgezogen. Die erfindungsgemäße Mehrschichtfolie ist bevorzugt in einem Tiefziehverhältnis im Bereich von 1:1 bis 1:3 tiefgezogen.

Um Verzerrungen des Druckbilds **D** durch den Tiefziehvorgang zu vermeiden, ist es möglich, das Druckbild **D** beim Bedrucken in den später tiefzuziehenden Bereichen zu stauchen, damit diese Stauchung durch die spätere Dehnung beim Tiefziehen kompensiert wird. Auch ist es möglich, das Druckbild **D** nur in den Bereichen der Mehrschichtfolie aufzubringen, welche nicht thermogeformt werden.

Ein weiterer Aspekt der Erfindung betrifft die Verwendung einer vorstehend beschriebenen Mehrschichtfolie oder einer vorstehend beschriebenen Verpackung zur Verpackung eines Verpackungsguts.

In einer bevorzugten Ausführungsform der erfindungsgemäßen Verwendung ist das Verpackungsgut ein verderbliches Nahrungsmittel.

Die folgenden Beispiele dienen zur weiteren Erläuterung der Erfindung, sind jedoch nicht einschränkend hinsichtlich ihres Umfangs auszulegen.

*Methode zur Bestimmung der Verbundhaftung in Anlehnung an DIN 53 357*:

Die Verbundhaftung wird erfindungsgemäß bevorzugt in Anlehnung an DIN 53 357 gemessen.

Dabei wird unter Verbundhaftung der Maximalwert der Kraft verstanden, der notwendig ist, um die zu prüfende Mehrschichtfolie mit einem Prüfstreifen von 15 mm Breite auf einer Länge von 10 mm unter einem Trennwinkel von 90° spaltend zu trennen. Die Verbundhaftung wird in der Dimension "N/15 mm" angegeben.

Dazu werden aus der Mehrschichtfolie mit einem Streifenschneider Streifen mit einer Breite von 15 mm und einer Länge von 60 mm geschnitten. Die Prüfstreifen werden an beiden Enden im Verbund ca. 2 cm getrennt. Die Trennung wird mechanisch durchgeführt, da die Verwendung von Lösungsmitteln die Messwerte verfälschen würde. Der so vorbereitete Prüfstreifen wird straff mit der mechanisch stabileren (äußeren) Schicht auf ein Kugellager aufgespannt, dessen äußere Seite mit doppelklebendem Klebeband versehen ist. Ein angetrenntes Ende wird in den mit dem Messkopf verbundenen Spannkopf so eingespannt, dass er nicht durchhängt, aber auch kein Messwert angezeigt wird. Die voneinander getrennten Folienverbunde bilden einen Winkel von ca. 90°.

Dann wird die Prüfung durchgeführt und der Höchstwert der auftretenden Kraft registriert. In Zweifelsfällen wird auch das andere Ende des Streifens geprüft.

Als Messgeräte für die Prüfung der Verbundhaftung eignet sich

- eine rechnergesteuerte Zugprüfungsmaschine Zwick 1435 (Kraftmesskopf
- 50 N),
- Messbereich 10 N
- Genauigkeit 1 %
- Abzug 10 mm
- Prüfgeschwindigkeit 100 mm/min
- Kugellager 90 mm Ø, Breite > 15 mm.

Beispiel:

Eine mehrlagige Siegelschicht mit dem Aufbau

$$( \text{EVA} / \text{PE} / \text{HV} / \text{EVOH} / \text{HV} / \text{PE} / \text{PE-Peel} )$$

$$4\ \mu m \quad 6{,}4\ \mu m \quad 2{,}8\ \mu m \quad 3\ \mu m \quad 2{,}8\ \mu m \quad 6\ \mu m \quad 15\ \mu m$$

und einer Gesamtschichtdicke von 40 μm wurde durch Coextrusion hergestellt. Der Gehalt an Vinylacetet in der auf EVA basierenden Schicht betrug 9%. Die peelbare Oberflächenlage "PE-Peel" basierte zu 85% auf LDPE und zu 15% auf PB.

Auf der EVA-Seite wurde die Siegelschicht nacheinander mit mehreren Farben jeweils teilflächig bedruckt, wodurch ein vollflächiges Druckbild erhalten wurde.

Auf einer kommerziellen Extrusionslinie mit einer Flachdüse (300 μm x 1,5 m) wurde PET, welches bei einer Temperatur von ca. 280°C geschmolzen wurde, auf das Druckbild der Siegelschicht extrusionsbeschichtet. Das PET (Schichtdicke 300 μm) wies eine intrinsische Viskosität von 0,8 und einen Schmelzpunkt von ca. 240°C auf.

Man erhielt eine Mehrschichtfolie des Aufbaus PET-**D**-(EVA/PE/HV/EVOH/HV/PE/PE-Peel) mit einer Gesamt-schichtdicke von 340 μm. Die gemessene Verbundhaftung zwischen der unmittelbar an das Druckbild angrenzenden Trägerschicht (PET) und der mehrlagigen Siegelschicht betrug 10,7 N/15 mm.

Die erhaltene Mehrschichtfolie wurde auf einer Formstation vom Typ *Multivac R 230* mit einer Formgeometrie der Länge 180 mm, der Breite 110 mm und der Höhe 50 mm bei einer Formtemperatur von 95°C, einer Formzeit von 2,5 Sekunden und einer Taktzahl von 14,5 min$^{-1}$ ohne Einreißen vollständig ausgeformt.

Vergleichsbeispiel:

Kommerziell verfügbare Mehrschichtfolien, welche biaxial orientierte Schichten basierend auf Polyamid (*Bia-Ion*®), Polyester (*Biaxer*®) bzw. Polypropylen (*Biaxop*®) enthalten, wurden auf einer Formstation vom Typ *Multivac R 230* unter den vorstehend genannten Bedingungen ausgeformt. Bei der Thermoformung beobachtete man jedoch ein Einreißen dieser Mehrschichtfolien.

**Patentansprüche**

1.  Thermoformbare Mehrschichtfolie umfassend

    - eine Trägerschicht **T,** welche auf zumindest einem thermoplastischen Polymer basiert und eine der beiden Oberflächenschichten der Mehrschichtfolie bildet;
    - eine Siegelschicht **S,** welche ggf. mehrlagig ist, auf zumindest einem thermoplastischen Polymer basiert und die andere der beiden Oberflächenschichten der Mehrschichtfolie bildet;
    - ggf. eine oder mehrere Zwischenschichten, welche gleich oder verschieden auf zumindest einem thermoplastischen Polymer basieren und zwischen der Trägerschicht **T** und der Siegelschicht **S** angeordnet sind; und
    - ein innenliegendes Druckbild **D;**

    wobei die beiden unmittelbar an das Druckbild **D** angrenzenden Schichten gleich oder verschieden jeweils eine Schichtdicke von mehr als 2,0 μm aufweisen.

2.  Mehrschichtfolie nach Anspruch 1, **dadurch gekennzeichnet, dass** sie auf einer Formstation vom Typ *Multivac R 230* mit einer Formgeometrie der Länge 180 mm, der Breite 110 mm und der Höhe 50 mm bei einer Formtemperatur von 95°C, einer Formzeit von 2,5 Sekunden und einer Taktzahl von 14,5 min$^{-1}$ ohne Einreißen vollständig ausgeformt werden kann.

3.  Mehrschichtfolie nach Anspruch 1 oder 2, **dadurch gekennzeichnet, dass** die beiden unmittelbar an das Druckbild **D** angrenzenden Schichten jeweils

    - nicht auf einem Kaschierklebstoff, und/oder
    - nicht auf einem Heiß-Siegel-Klebstoff, und/oder
    - nicht auf einem Lack, und/oder
    - nicht auf einem orientierten Polymer

    basieren.

**4.** Mehrschichtfolie nach einem der vorstehenden Ansprüche, **dadurch gekennzeichnet, dass** die beiden unmittelbar an das Druckbild **D** angrenzenden Schichten durch Extrusionsbeschichtung oder Extrusionskaschierung zusammengefügt sind.

**5.** Mehrschichtfolie nach einem der vorstehenden Ansprüche, **dadurch gekennzeichnet, dass** zumindest eine der beiden unmittelbar an das Druckbild **D** angrenzenden Schichten auf wenigstens einem thermoplastischen Polymer basiert ausgewählt aus der Gruppe bestehend aus Polyestern, Copolyestern, Polycarbonaten, Copolycarbonaten, Polyamiden, Copolyamiden, Polyolefinen und Olefin-Copolymerisaten, oder deren Mischung.

**6.** Mehrschichtfolie nach einem der vorstehenden Ansprüche, **dadurch gekennzeichnet, dass** die Verbundhaftung zwischen den beiden unmittelbar an das Druckbild **D** angrenzenden Schichten wenigstens 4,0 N/15 mm beträgt.

**7.** Mehrschichtfolie nach einem der vorstehenden Ansprüche, **dadurch gekennzeichnet, dass** sie keine mit Hilfe eines Kaschierklebstoffs verbundenen Schichten umfasst.

**8.** Mehrschichtfolie nach einem der vorstehenden Ansprüche, **dadurch gekennzeichnet, dass** die Trägerschicht **T** auf wenigstens einem thermoplastischen Polymer basiert ausgewählt aus der Gruppe bestehend aus Polyestern, Copolyestern Polycarbonaten, Copolycarbonaten, Polyamiden, Copolyamiden, Polyolefinen und Olefin-Copolymerisaten, oder deren Mischung.

**9.** Mehrschichtfolie nach Anspruch 8, **dadurch gekennzeichnet, dass** die Trägerschicht **T** auf wenigstens einem thermoplastischen Polymer basiert ausgewählt aus der Gruppe bestehend aus Polyethylen, Polypropylen, Polymethylmethacrylat, Polyethylenterephthalat, Polybutylenterephthalat, Polycarbonat und Polyamid, oder deren Mischung.

**10.** Mehrschichtfolie nach einem der vorstehenden Ansprüche, **dadurch gekennzeichnet, dass** die Trägerschicht **T** unmittelbar an das Druckbild **D** angrenzt.

**11.** Mehrschichtfolie nach Anspruch 10, **dadurch gekennzeichnet, dass** die Trägerschicht **T eine** Schichtdicke im Bereich von 20 $\mu$m aufweist.

**12.** Mehrschichtfolie nach einem der vorstehenden Ansprüche, **dadurch gekennzeichnet, dass** die Siegelschicht **S**

- wenn sie einlagig ist, auf wenigstens einem Polyolefin, Olefin-Copolymerisat oder deren Mischung basiert; und
- wenn sie mehrlagig ist, zumindest eine Lage enthält, welche auf wenigstens einem Polyolefin, Olefin-Copolymerisat oder deren Mischung basiert.

**13.** Mehrschichtfolie nach einem der vorstehenden Ansprüche, **dadurch gekennzeichnet, dass** die Siegelschicht **S** mehrlagig ist und eine Barrierelage umfasst.

**14.** Mehrschichtfolie nach Anspruch 13, **dadurch gekennzeichnet, dass** die Barrierelage auf Ethylen-Vinylalkohol-Copolymerisat basiert.

**15.** Mehrschichtfolie nach einem der vorstehenden Ansprüche, **dadurch gekennzeichnet, dass** zwischen der Trägerschicht **T** und der Siegelschicht **S** eine oder mehrere Zwischenschichten angeordnet sind, welche gleich oder verschieden basieren auf wenigstens einem thermoplastischen Polymer ausgewählt aus der Gruppe bestehend aus Polyestern, Copolyestern, Polycarbonaten, Copolycarbonaten, Polyamiden, Copolyamiden, Polyolefinen und Olefin-Copolymerisaten, oder deren Mischung.

**16.** Mehrschichtfolie nach einem der vorstehenden Ansprüche, **dadurch gekennzeichnet, dass** ihre Gesamtschichtdicke im Bereich von 50 bis 700 $\mu$m liegt.

**17.** Verpackung umfassend eine Mehrschichtfolie nach einem der Ansprüche 1 bis 16.

**18.** Verpackung nach Anspruch 17, **dadurch gekennzeichnet, dass** die Mehrschichtfolie thermogeformt ist.

**19.** Verwendung einer Mehrschichtfolie nach einem der Ansprüche 1 bis 16 oder einer Verpackung nach Anspruch 17 oder 18 zur Verpackung eines Verpackungsguts.

**20.** Verwendung nach Anspruch 19, **dadurch gekennzeichnet, dass** das Verpackungsgut ein verderbliches Nahrungsmittel ist.

**21.** Verfahren zur Herstellung einer thermoformbaren Mehrschichtfolie nach einem der Ansprüche 1 bis 16, umfassend die Schritte

(a) Bedrucken zumindest eines Teils der Fläche zumindest einer Seite einer Folie, welche ggf. mehrere Schichten umfasst; und
(b) Aufbringen einer Polymerschicht auf die Fläche der Folie, von der in Schritt (a) zumindest ein Teil bedruckt wurde;

wobei sowohl die in Schritt (a) bedruckte Folie als auch die in Schritt (b) aufgebrachte Polymerschicht eine Schichtdicke von mehr als 2,0 $\mu$m aufweisen.

**22.** Verfahren nach Anspruch 21, **dadurch gekennzeichnet, dass** Schritt (b) als Extrusionskaschierung oder als Extrusionsbeschichtung erfolgt.

**23.** Thermoformbare Mehrschichtfolie erhältlich durch ein Verfahren nach Anspruch 21 oder 22.

**Europäisches Patentamt**

**EUROPÄISCHER RECHERCHENBERICHT**

Nummer der Anmeldung

EP 06 00 9422

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 590 769 A (GENERAL TIRE & RUBBER CO) 10. Juni 1981 (1981-06-10) * Seite 1, Zeile 23 - Seite 2, Zeile 43 * * Seite 2, Zeile 56 - Seite 3, Zeile 59; Ansprüche; Abbildung 1 * ----- | 1,3,4,7, 16,21-23 | INV. B32B27/00 |
| X | WO 93/08018 A (PARAMOUNT PACKAGING CORPORATION) 29. April 1993 (1993-04-29) * Seite 23, Zeile 9 - Zeile 11; Ansprüche 16,17,19; Abbildungen * * Seite 5, Zeile 30 - Seite 6, Zeile 10 * * Seite 6, Zeile 29 - Seite 7, Zeile 5 * * Seite 7, Zeile 24 - Seite 8, Zeile 3 * * Seite 9, Zeile 8 - Seite 11, Zeile 21 * * Seite 12, Zeile 20 - Seite 14, Zeile 7 * * Seite 16, Zeile 24 - Zeile 29 * ----- | 1,3-5, 7-12, 15-23 | |
| X | CH 684 254 A (ALUSUISSE-LONZA SERVICES AG 8034 ZUERICH ZUSTELLADRESSE:) 15. August 1994 (1994-08-15) * Spalte 1, Zeile 28 - Zeile 35 * * Spalte 1, Zeile 36 - Zeile 63 * * Spalte 4, Zeile 30 - Zeile 64; Ansprüche * * Spalte 3, Zeile 52 * * Spalte 7, Zeile 6 - Zeile 10 * ----- | 1,5,8,9, 11,12, 15-23 | **RECHERCHIERTE SACHGEBIETE (IPC)** B32B |
| X | GB 2 329 607 A (* AEP BORDEN PACKAGING UK LIMITED) 31. März 1999 (1999-03-31) * Seite 1, Zeile 1 - Seite 2, Zeile 7; Ansprüche 1-9 * ----- | 1,5,8,9, 12, 16-21,23 | |

Der vorliegende Recherchenbericht wurde für alle Patentansprüche erstellt

| Recherchenort | Abschlußdatum der Recherche | Prüfer |
|---|---|---|
| München | 27. September 2006 | Kanetakis, Ioannis |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 9422

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2006

| Im Recherchenbericht angeführtes Patentdokument | | Datum der Veröffentlichung | Mitglied(er) der Patentfamilie | | Datum der Veröffentlichung |
|---|---|---|---|---|---|
| GB 1590769 | A | 10-06-1981 | BE | 863878 A1 | 29-05-1978 |
| | | | CA | 1106270 A1 | 04-08-1981 |
| | | | DE | 2757153 A1 | 17-08-1978 |
| | | | FR | 2380132 A1 | 08-09-1978 |
| | | | IT | 1089789 B | 18-06-1985 |
| | | | JP | 1029945 C | 22-01-1981 |
| | | | JP | 53099287 A | 30-08-1978 |
| | | | JP | 55023745 B | 25-06-1980 |
| WO 9308018 | A | 29-04-1993 | CA | 2121140 A1 | 29-04-1993 |
| | | | EP | 0608372 A1 | 03-08-1994 |
| CH 684254 | A | 15-08-1994 | KEINE | | |
| GB 2329607 | A | 31-03-1999 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 860271 A

**In der Beschreibung aufgeführte Nicht-Patentliteratur**

- **G. HABENICHT.** Kleben: Grundlagen, Technologie, Anwendungen. Springer Verlag, 1986
- technische Thermoplaste: Polycarbonate, Polyacetale, Polyester, Celluloseester. Kunststoffhandbuch. Carl Hanser Verlag, vol. 3/1
- **KUNSTSTOFF.** Polyamide. Carl Hanser Verlag, 1966, vol. VI
- **MELVIN I. KOHAN.** Nylon Plastics Handbook. Carl Hanser Verlag, 1995
- **HERNANDEZ ; SELKE ; CULTER.** Plastics Packaging. Carl Hanser Verlag, 2000
- Introduction to extrusion coating equipment for engineers. **L. PIFFER.** TAPPI American PLACE Conference. 2001
- Extrusion coating as an effective method for coating and laminating. **M. ANDREOLI.** TAPPI 9th European PLACE Conference. 12. Mai 2003
- Directextrusion - a new challenge for economical coating. **K. KRUMM.** TAPPI 9th European PLACE Conference. 12. Mai 2003